# EUROPEAN PATENT APPLICATION

(11) **EP 4 213 286 A1**
(43) Date of publication of application: **19.07.2023**
(21) Application number: 23151439.9
(22) Date of filing: 13.01.2023
(51) Int. Cl.: H01M 50/213, H01M 50/233, H01M 50/236, H01M 50/238, H01M 50/242, H01M 50/291

(54) **BATTERY HOLDING APPARATUS AND BATTERY ASSEMBLY**

(30) Priority: 17.01.2022 CN 202210051063
(71) Applicant: Techtronic Cordless GP, Anderson, SC 29621 (US)
(72) Inventor: ZENG, Kui, Anderson, 29621 (US); WANG, Nan, Anderson, 29621 (US); LI, Xiwen, Anderson, 29621 (US)
(74) Representative: Novagraaf Group

(57) **Abstract**

The present invention provides a battery holding apparatus and a battery assembly. Two types of radial limiting part are provided in the battery holding apparatus. A first radial limiting part (313, 513, 613) is configured to elastically abut a cell (200) radially; and a radial distance between a second radial limiting part (314, 514) and a cell axis of the cell is greater than a radial distance between the first radial limiting part and the cell axis. The second radial limiting part can ensure a radial holding force for the battery when the first radial limiting part fails, thus preventing battery failure. Furthermore, the battery holding apparatus of the present invention is also compatible with cells having radial size process errors; whether they are cells slightly larger than the standard size or cells slightly smaller than the standard size, the battery holding apparatus of the present invention is able to clamp them and provide an effective holding force for them.

## Description

### Technical field

The present invention relates to the field of batteries, in particular to a battery holding apparatus. The present invention also relates to a battery assembly.

### Background art

Regarding battery holding apparatuses (for holding batteries) which are commonly seen on the market at the present time, the component thereof that is used to radially limit a battery has a relatively simple structure, and such a structure might have an adverse impact on the battery's service performance and life. For example, it has been found through battery dropping experiments that if the simple radial limiting structure fails, the battery holding apparatus will no longer be able to provide sufficient limiting support for the battery cells, and this might cause battery failure. Furthermore, although a standard cell has a standardized radial size, there may be slight differences in radial size from cell to cell due to production error, so if only a simple limiting structure is used, this might result in inability to clamp a battery in which some of the radial sizes are smaller, or might result in overclamping of, and hence damage to, a battery in which some of the radial sizes are larger.

Thus, there is a need to provide a battery holding apparatus and a battery assembly, in order to at least partially solve the abovementioned problems.

### Summary of the invention

An objective of the present invention is to provide a battery holding apparatus and a battery assembly. The battery holding apparatus of the present invention is provided with radial limiting parts of at least two radial sizes, of which one radial limiting part is used to elastically clamp a cell of the battery radially during normal use, and another radial limiting part is used to ensure a radial holding force for the battery when the first radial limiting part fails, thus preventing battery failure. Furthermore, the battery holding apparatus of the present invention is also compatible with cells having radial size process errors; whether they are cells slightly larger than the standard size or cells slightly smaller than the standard size, the battery holding apparatus of the present invention is able to clamp them and provide an effective holding force for them.

According to one aspect of the present invention, a battery holding apparatus is provided, for holding a battery comprising at least one cell; the battery holding apparatus at least comprises a holding component located at one end of the cell in a height direction, the holding component comprising at least one holding unit corresponding to the at least one cell, and each holding unit comprising:
a base, defining a support face supporting the cell;
a first radial limiting part, extending from the base in the height direction of the cell and configured to be able to elastically abut the cell radially;
a second radial limiting part, extending from the base in the height direction of the cell and arranged rigidly, wherein a radial distance between the second radial limiting part and a cell axis of the cell is greater than a radial distance between the first radial limiting part and the cell axis.

In one embodiment, the height of the first radial limiting part is less than the height of the second radial limiting part.

In one embodiment, the base has a recess which is sunk relative to the support face, and part of the first radial limiting part in the height direction is located in the recess.

In one embodiment, the battery holding apparatus is used to hold a cylindrical cell, and a face of the first radial limiting part that faces the cell is externally tangential to a side face of the cell; and a face of the second radial limiting part that faces the cell wraps around the cell.

In one embodiment, three adjacent said holding units can share one said first radial limiting part comprising three jaws, each jaw respectively abutting the cell in one said holding unit.

In one embodiment, peripheral surfaces of the three jaws of the first radial limiting part are formed as arc-shaped faces with the same axis and equal radii.

In one embodiment, each jaw comprises an arc-shaped wall segment extending in the height direction, and a top segment at the top of the arc-shaped wall segment, the top segment extending radially towards an axis of the arc-shaped wall.

In one embodiment, three adjacent said holding units can share one said second radial limiting part, the second radial limiting part being formed as an annular structure enclosed by three arc-shaped sidewalls.

In one embodiment, the battery holding apparatus is used to hold a cylindrical cell, each holding unit comprises a side enclosing barrier which surrounds the cell circumferentially, the first radial limiting part is an elastic piece which is located at a radially inner side of the side enclosing barrier and spaced apart from the side enclosing barrier, and the second radial limiting part is a fixed block fixed to an inner wall of the side enclosing barrier.

In one embodiment, the base comprises a boss, a top surface of the boss defines the support face, the first radial limiting part and the second radial limiting part are located at a radially outer side of the boss, and the boss and the first radial limiting part are spaced apart from each other.

In one embodiment, the battery holding apparatus is used to hold a cylindrical cell, the holding unit comprises a side enclosing barrier which surrounds the cell circumferentially, an inner wall of the side enclosing barrier forms the second radial limiting part, and an elastic protrusion forming the first radial limiting part is formed on an inner wall of the side enclosing barrier.

In one embodiment, the holding component comprises a holding unit set comprising multiple holding units, and in the holding unit set: the side enclosing barrier of each holding unit extends through more than 180° but less than 360° in the circumferential direction, and the side enclosing barriers of the holding units are sequentially joined head-to-tail.

In one embodiment, a protruding part is provided at the centre of the holding unit set, each side face of the protruding part being formed as an arc-shaped face that is coaxial with and has the same radius as the side enclosing barrier that faces this side wall, and an elastic protrusion being provided on the arc-shaped face.

In one embodiment, the battery holding apparatus further comprises an elastic component extending around the periphery of the main body of the battery holding apparatus, the elastic component preferably being integrally formed with the elastic protrusion.

According to another aspect of the present invention, a battery assembly is provided, comprising:
at least one cell;
the battery holding apparatus as described in any one of the above solutions, for accommodating the cell.

### Brief description of the drawings

To better understand the above and other objectives, features, advantages and functions of the present invention, the preferred embodiments shown in the drawings may be referred to. In the drawings, identical reference labels denote identical components. Those skilled in the art should understand that the drawings are intended to illustrate preferred embodiments of the present invention schematically, and have no limiting effect on the scope of the present invention, and the various components in the drawings are not drawn to scale.
Fig. 1 is a schematic drawing of a battery assembly according to a preferred embodiment of the present invention.
Fig. 2 is a schematic drawing of the battery assembly with the first housing part in Fig. 1 removed.
Fig. 3 is a schematic drawing with some of the cells in Fig. 2 removed to show the structure of the bottom holding component.
Fig. 4 is a top view of the bottom holding component in Fig. 3.
Fig. 5 is an enlarged drawing of one holding unit in Fig. 4.
Fig. 6 is an enlarged three-dimensional drawing of the first radial limiting part in Fig. 4.
Fig. 7 is a schematic drawing of the bottom holding component according to another preferred embodiment of the present invention.
Fig. 8 is an enlarged drawing of one holding unit in Fig. 7.
Fig. 9 is a schematic drawing of part of the structure of the bottom holding component according to another preferred embodiment of the present invention.
Fig. 10 is a bottom view of the bottom holding component in Fig. 9.

### Key to drawings:

100 - battery assembly
200 - cell
10 - casing
11 - first housing part
12 - second housing part
20 - top holding component
30 - bottom holding component
311, 611 - base
312, 512, 612 - through-hole
313a, 513 - first radial limiting part
314a, 514 - second radial limiting part
313, 313c - jaw
314, 314c - arc-shaped sidewall
31a - first holding unit
31b - second holding unit
31c - third holding unit
31d - fourth holding unit
3111 - arc-shaped wall segment
3112 - top segment
32, 516 - recess
40 - conductive connecting piece
41 - contact part
42 - conduction part
51 - holding unit
515, 615 - side enclosing barrier
511 - boss
613 - elastic protrusion
613a - elastic protrusion located on side enclosing barrier
613b - elastic protrusion located on first side face of protruding part
613c - elastic protrusion located on second side face of protruding part
613d - elastic connecting segment
613e - elastic component
616 - protruding part
616a - first side face
616b - second side face

### Specific Embodiments

Particular embodiments of the present invention are now described in detail with reference to the drawings. The embodiments described here are merely preferred embodiments of the present invention. Based on these preferred embodiments, those skilled in the art will be able to think of other ways in which the present invention could be implemented, all of which likewise fall within the scope of the present invention.

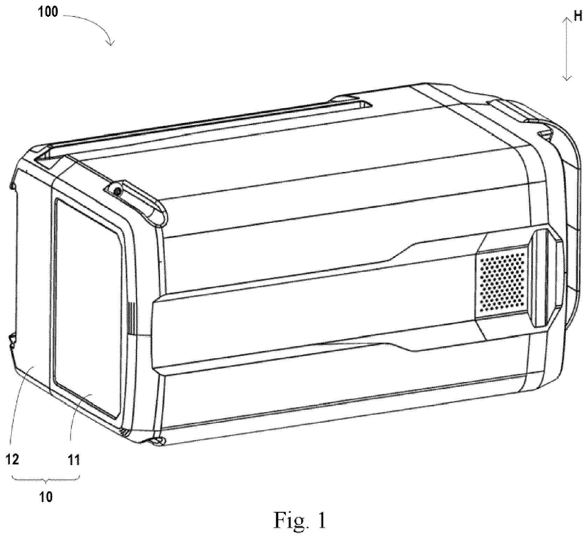

Figs. 1 - 10 show preferred embodiments of the battery holding apparatus and battery assembly according to the present invention. It must first be explained that directional and positional terms in the present invention should be understood as meaning relative directions and positions rather than absolute directions and positions. The directional and positional terms in the present invention may be explained with reference to the exemplary structures shown in Figs. 1 - 10. For example, the height direction of the cell as mentioned in the present invention may be direction H in Figs. 1 - 10. When the cell is a substantially cylindrical structure, the height direction is also the axial direction of the cylinder; and the circumferential direction and radial direction may be the circumferential direction and radial direction with respect to the axial direction. The existence of a "radial direction" and "axial direction" do not imply that the cell is definitely a cylindrical structure. For example, a direction that is parallel to the height direction of the cell and passes through the centre of the cell may be called the axial direction of the cell; and a direction that is perpendicular to the height direction of the cell and intersects a centre line extending in the height direction of the cell may be called the radial direction of the cell.

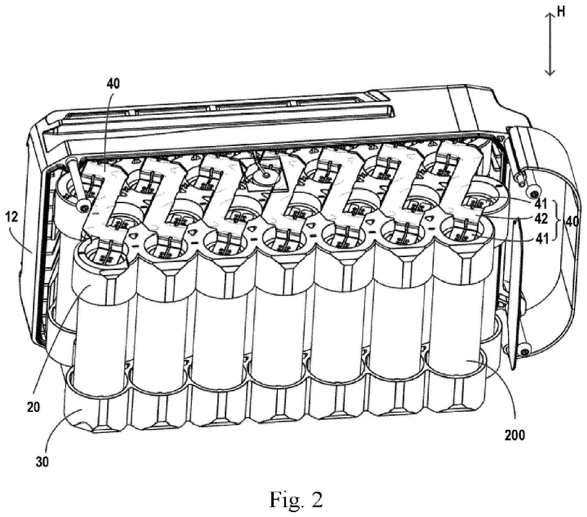

The battery assembly of the present invention comprises a battery holding apparatus and at least one cell held by the battery holding apparatus. Referring to Fig. 1, in a preferred embodiment, the battery assembly 100 comprises a casing 10, the casing 10 comprising a first housing part 11 and a second housing part 12 joined together in a direction perpendicular to the height direction H. The internal structure of the casing 10 is shown in Fig. 2; Fig. 2 is a view with the first housing part 11 removed.

Referring to Fig. 2, the battery holding apparatus in this embodiment is used to hold multiple cells 200, each cell 200 being a substantially cylindrical structure whose axis is parallel to the height direction H, and the multiple cells 200 being arranged like an array in a plane perpendicular to the height direction H. The battery holding apparatus comprises a top holding component 20 and a bottom holding component 30 located in the housing; the top holding component 20 and bottom holding component 30 are respectively fixed to the top and bottom of each cell 200 to jointly hold each cell 200 in the height direction H. It can be seen from Fig. 2 that a through-hole 312 is formed in a part of the top holding component 20 that corresponds to an end electrode of each cell 200, to allow a conductive connecting piece 40 to collect current from the end electrode of each cell 200. The conductive connecting piece 40 comprises an electrode contact part 41 in direct contact with the electrode of the cell 200, and a conduction part 42 connected to each electrode contact part 41.

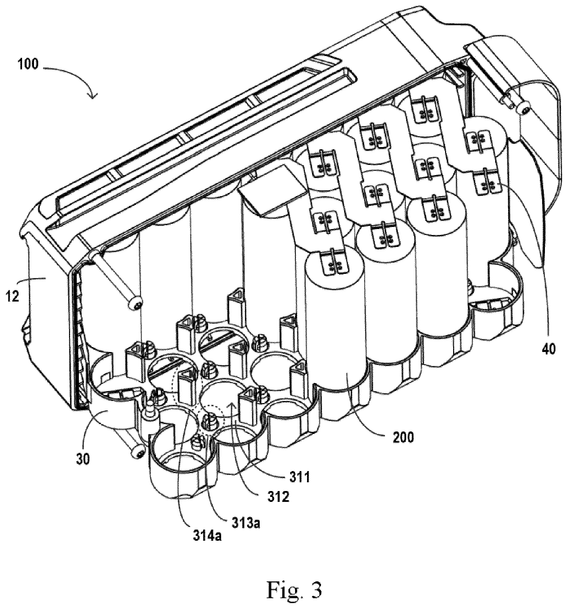

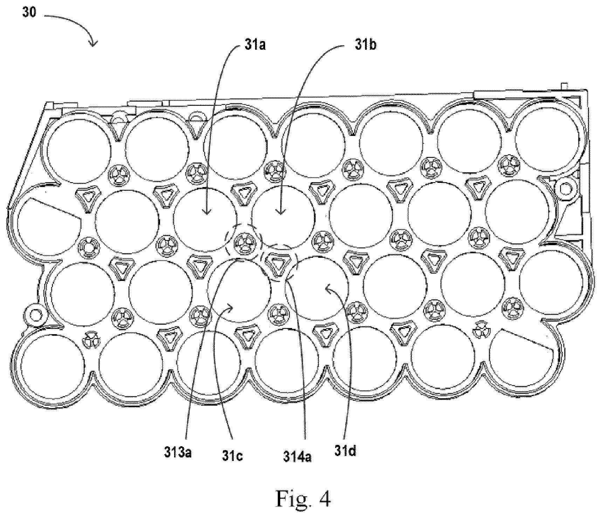

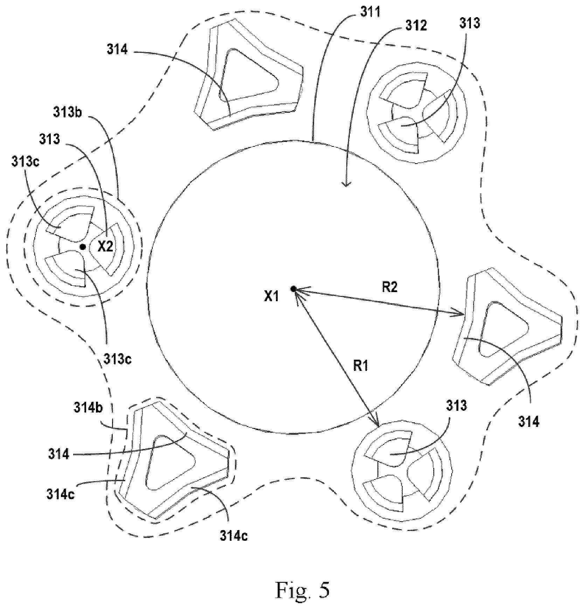

Fig. 3 shows a view with some of the cells 200 and the conductive connecting piece 40 in Fig. 2 removed. The structure of the bottom holding component 30 can be clearly seen in Fig. 3; the bottom holding component 30 defines multiple holding units, which perform a holding action at the bottom of the multiple cells 200 in one-to-one correspondence therewith. Fig. 4 is a top view of the bottom holding component 30 in Fig. 3; Fig. 5 is a partial enlarged drawing of one holding unit in Fig. 4. The structure of the bottom holding component 30 is explained in detail below with reference to Figs. 3-5.

First referring to Fig. 5, in this embodiment, one holding unit comprises a base 311, three first radial limiting parts 313a and three second radial limiting parts 314a. The base 311 defines a support face for supporting the bottom of the cell 200, the support face being arranged around a through-hole 312, the through-hole 312 preferably being arranged coaxially with the cell 200 (taking a cell axis X1 as the axis); the three first radial limiting parts 313a and three second radial limiting parts 314a all extend from the base 311 towards the top of the cell 200; the three first radial limiting parts 313a are arranged around the cell axis X1, and the three second radial limiting parts 314a are also arranged around the cell axis X1. A bottom end of the first radial limiting part 313a is fixedly connected to the base 311, but a top end of the first radial limiting part is free. When the cell 200 is placed in position, the first radial limiting part 313a will deform in a direction away from the cell axis X1, and there is thus a biasing force applied to the cell 200 in a direction towards the cell axis X1. That is to say, the first radial limiting part 313a is elastic, and can elastically abut a sidewall of the cell 200 radially, in an interference fit with the cell 200. The second radial limiting part 314a is a non-deformable rigid structure with a non-displaceable top. There may be a radial gap between the second radial limiting part 314b and the sidewall of the cell 200, to define the maximum radial size of the cell 200 that the holding unit is able to hold. It must be explained that the meanings of "rigid" and "elastic" in the present invention should be understood based on common knowledge in the relevant fields of batteries substantially consisting of multiple cells, etc. For example, as those skilled in the art will understand, the statement that the second radial limiting part is rigid means that even if the second radial limiting part and the cell are pressed together, the second radial limiting part will not experience significant deformation, and the second radial limiting part cannot provide an elastic force for causing it to abut the cell; and the statement that the first radial limiting part is elastic means that the first radial limiting part can experience relatively significant deformation when the first radial limiting part and the cell press against each other, and the cell exhibiting a degree of deformation thus has an elastic force which presses itself tightly against the cell.

Continuing to refer to Fig. 5, if the radius of the standard cell 200 is R, then R1 ≤ R ≤ R2, so that when the cell 200 is installed on the holding unit, the first radial limiting part 313a elastically abuts the sidewall of the cell 200 radially, and there is a radial gap between the second radial limiting part 314a and the cell 200. In the case of a standard cell 200 of height 65 mm and diameter 21.2 - 21.5 mm, R1 may be set to 10.6 mm and R2 may be set to 10.75 mm. In some embodiments having similar standard cells, the value of R1 may for example be set so that R - R1 ≈ 0.01 mm.

Referring to Figs. 3 - 5, in this embodiment, adjacent holding units may also together form a holding unit set, and each holding unit set may share the same first radial limiting part 313a or second radial limiting part 314a. Further, lines sequentially connecting the radial centres of the holding units in the holding unit set (i.e. the centres of the through-holes 312 in the bases 311 of the holding units) form a polygon, and said same first radial limiting part 313a or second radial limiting part 314a is located at the radial centre of the holding unit set; said same first radial limiting part 313a or second radial limiting part 314a is respectively used for holding the cells corresponding to multiple holding units.

For example, referring to Fig. 4, lines sequentially connecting the radial centres of a first holding unit 31a, a second holding unit 31b and a third holding unit 31c form a triangle. The holding unit set formed by the first holding unit 31a, the second holding unit 31b and the third holding unit 31c can share one first radial limiting part 313a. This first radial limiting part 313a comprises three jaws for respectively clamping cells in the first holding unit 31a, the second holding unit 31b and the third holding unit 31c. Similarly, lines sequentially connecting the radial centres of the second holding unit 31b, the third holding unit 31c and a fourth holding unit 31d form a triangle. The holding unit set formed by the second holding unit 31b, the third holding unit 31c and the fourth holding unit 31d can share one second radial limiting part 314a. This second radial limiting part 314a comprises three arc-shaped sidewalls enclosing a ring shape; these three arc-shaped sidewalls are configured to have a radial limiting action on the cells in the second holding unit 31b, the third holding unit 31c and the fourth holding unit 31d, respectively.

An exemplary schematic drawing of the three-dimensional structure of the first radial limiting part 313a and the second radial limiting part 314a is shown in Fig. 3, while a top view of these parts is shown in Fig. 5.

Referring to Fig. 3, the height of each first radial limiting part 313a is less than the height of each second radial limiting part 314a. The height of the rigid second radial limiting part 314a is configured to be longer to ensure that the cell 200 can still be held securely during use or in the event of an accident, so is unlikely to fail completely.

Referring to Fig. 5, preferably, a face of the first radial limiting part 313a that faces the cell 200 is an arc-shaped face tangential to the sidewall of the cell 200, and the first radial limiting part 313a comprises three jaws, a first jaw 313 and second and third jaws 313c. Respective peripheral surfaces of the second and third jaws 313c and the first jaw 313 are formed as arc-shaped faces with the same axis (taking X2 as the axis) and equal radii. The first jaw 313 is used to clamp the cell held by the holding unit shown in Fig. 5; the second and third jaws 313c are used to hold the cells held by the holding units adjacent to this holding unit.

Likewise preferably, a face of the second radial limiting part 314a that faces the cell 200 is an arc-shaped face which surrounds the cell 200 in a uniform shape; this arc-shaped face also has the cell axis X1 as an axis. The second radial limiting part 314a comprises a first arc-shaped wall 314 and second and third arc-shaped walls 314c which are sequentially joined head-to-tail to form a ring shape. The centre of this ring shape is a hollow structure, which facilitates shrinkage when injection moulding is performed and can also achieve the objectives of weight reduction and heat dissipation. The first arc-shaped wall 314 is used to radially limit the cell held by the holding unit shown in Fig. 5; the second and third arc-shaped walls 314c are used to radially limit the cells held by the holding units adjacent to this holding unit.

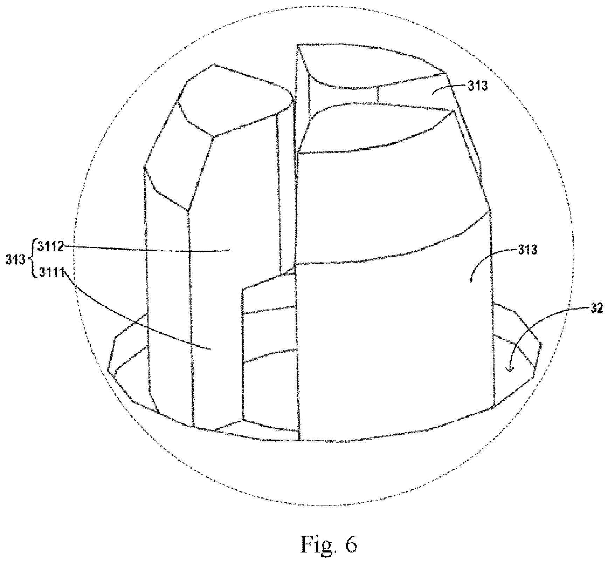

This embodiment has some further preferred configurations for the first radial limiting part 313a. For example, referring to Fig. 6, the first radial limiting part 313a is connected in a recess 32 of the base 311, the recess being sunk relative to the support face, so that a middle segment of the first radial limiting part 313a in the height direction H abuts the cell 200 elastically; clearly, the middle segment can provide a better elastic force. If no recess 32 is provided, it might not be possible to place the cell 200 in position; and if the cell 200 is installed in position forcibly, this is likely to cause the bottom of the first radial limiting part 313a to break. Furthermore, each first radial limiting part 313a comprises an arc-shaped wall segment 3111 extending in the height direction, and a top segment 3112 at the top of the arc-shaped wall segment 3111, the top segment extending radially towards the axis X2 of the arc-shaped wall. Preferably, the thickness of the top segment 3112 is greater than the thickness of the arc-shaped wall; such a configuration can ensure that the first radial limiting part 313a is able to provide better elasticity while also having better strength and being unlikely to suffer permanent deformation.

The bottom holding component 30 in this embodiment is made of PC plastic in an integrally formed manner, and the wall thickness of the second radial limiting part 314a is formed to be greater than the wall thickness of the arc-shaped wall segment 3111 of the first radial limiting part 313a, to correspondingly realize the rigidity of the second radial limiting part 314a and the elasticity of the first radial limiting part 313a. As stated above, this embodiment is suitable for cells 200 of height 65 mm and diameter 21.2 - 21.5 mm; corresponding to such cells 200, the wall thickness of the arc-shaped wall segment 3111 of the first radial limiting part 313a may be 1.2 mm, this value having been obtained through repeated experiments. It has been established through repeated experiments that when the wall thickness of the arc-shaped wall segment 3111 of the first radial limiting part 313a is greater than 1.2 mm, the first radial limiting part 313a has high rigidity and low flexibility, so is likely to apply too large a clamping force to the cell 200 and thereby destroy the cell 200; when the wall thickness of the arc-shaped wall segment 3111 of the first radial limiting part 313a is less than 1.2 mm, the first radial limiting part 313a is too flexible, and cannot secure the cell 200.

Referring to Fig. 3 again, in this embodiment, the holding units are not completely closed; as can be seen, even in the state of being held by the bottom holding component 30, the bottoms of adjacent cells 200 still communicate with each other in space. The bottom holding component 30 is not provided with a structure for separating the bottoms of adjacent cells 200 from each other. The bottom holding component 30 is provided with a sidewall which surrounds all of the holding units in the peripheral direction, in order to secure the bottoms of the multiple cells to a certain extent.

In this embodiment, the structure of the top holding component 20 may be substantially the same or exactly the same as the structure of the bottom holding component 30. Multiple holding units are also provided on the top holding component 20; the holding units of the top holding component 20 are in one-to-one correspondence with the holding units of the bottom holding component 30. The holding units on the top holding component 20 also have first radial limiting parts and second radial limiting parts which are identical or similar to the holding units of the bottom holding component 30.

In this embodiment, the solidity of the battery assembly can also be further improved by configuring the casing 10 to have the structure shown in Fig. 1. The reason for this is that the first radial limiting part 313a of the bottom holding component 30 deforms radially outwards with respect to the cell axis X2 and thereby experiences elasticity, and because the bottom thereof is fixed, the elastic force will have an axial component of force towards the top as well as a radial component of force towards the cell axis X1; by the same principle, the first radial limiting part 313a of the bottom holding component 30 will also have an axial component of force towards the bottom as well as a radial component of force towards the cell axis X1. The top holding component and bottom holding component 30 clamp the cells 200 axially, providing an axial holding force as well as a radial holding force for them. To prevent axial separation of the top holding component 20, the cells 200 and the bottom holding component 30, the two housing parts in this embodiment each have a top housing wall, a side housing wall and a bottom housing wall which are integrally formed, and thus hold the top holding component 20, the cells 200 and the bottom holding component 30 together securely.

It must be explained that although there are three elements in the "holding unit set", three elements in the "jaws of the first radial limiting part" and three elements in the "arc-shaped walls of the second radial limiting part" in this embodiment, the number of elements in each set may be four or more in other embodiments which are not shown. For example, there may be a holding unit set comprising four holding units; lines connecting the centres of the bottoms of these four holding units may form a rhombus; and a first radial limiting part comprising four jaws or a second radial limiting part comprising four arc-shaped walls may be provided at the centre of the four holding units.

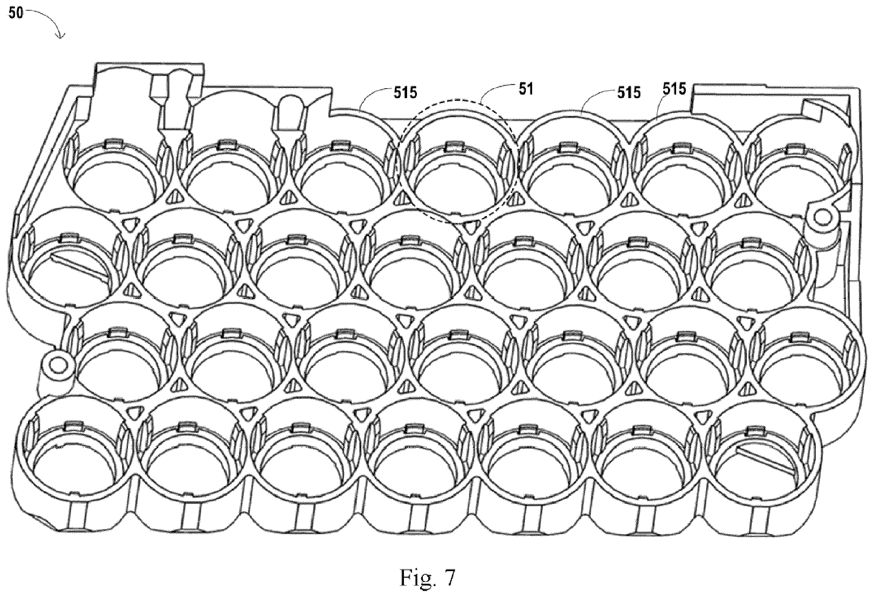

Figs. 7 - 8 show structural schematic drawings of a bottom holding component in another preferred embodiment according to the present invention. Unlike the structure shown in Fig. 3, in which the bottoms of adjacent cells communicate with each other in space, each holding unit 51 in the bottom holding component 50 in Figs. 7-8 comprises a side enclosing barrier 515 surrounding a cell circumferentially; as a result, the bottom holding component 50 is manifestly divided into multiple independent spaces arranged like an array.

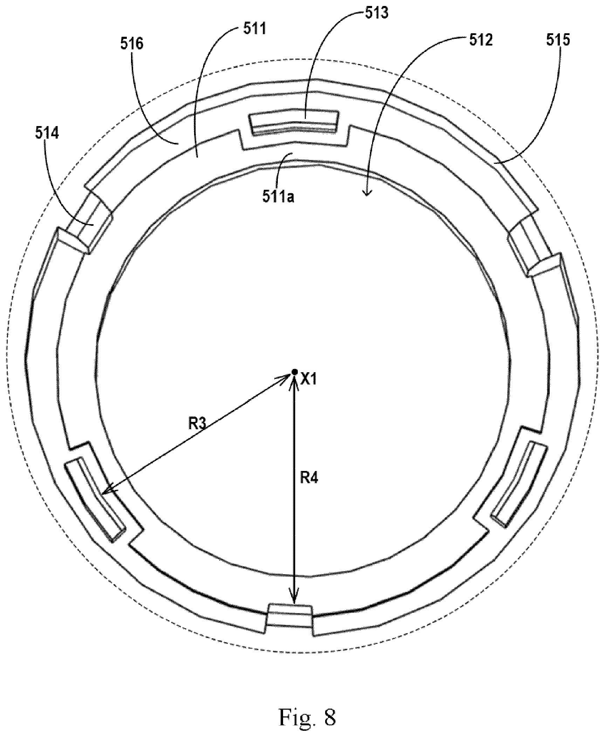

Referring to Fig. 8, for each holding unit 51, a first radial limiting part 513 that elastically abuts the cell radially is an elastic piece which is located at a radially inner side of the side enclosing barrier 515 and spaced apart from the side enclosing barrier 515. A rigidly arranged second radial limiting part 514, configured to be separated from the cell by a radial gap, is a fixed block fixed to an inner wall of the side enclosing barrier 515. In this embodiment, three first radial limiting parts 513 arranged around the cell axis X1 are provided; when viewed as shown in Fig. 8, the projections of inside walls of the three first radial limiting parts 513 are all located on a circle of radius R3 with the cell axis X1 as the axis (the centre of the circle). Three second radial limiting parts 514 arranged around the cell axis X1 are provided; when viewed as shown in Fig. 8, the projections of inside walls of the three second radial limiting parts 514 are all located on a circle of radius R4 with the cell axis X1 as the axis (the centre of the circle). If the diameter of a standard cell is R, then R3 ≤ R ≤ R4, so that when the cell is installed on the holding unit 51, the first radial limiting part 513 elastically abuts the sidewall of the cell radially, and there is a radial gap between the second radial limiting part 514 and the cell.

Preferably, continuing to refer to Fig. 8, in this embodiment, the base comprises an annular boss 511 surrounding a through-hole 512. A top surface of the annular boss 511 defines a support face; the first radial limiting parts 513 and the second radial limiting parts 514 are located at a radially outer side of the annular boss 511, and the annular boss 511 is spaced apart from the first radial limiting parts 513.

Clearly, a sunken recess 516 forms a ring at the radially outer side of the annular boss 511; this is equivalent to the first radial limiting part 513 being connected in the recess 516 of the base, the recess being sunk relative to the support face, so that a middle segment of the first radial limiting part 513 in the height direction abuts the cell elastically. At the same time, this circumferentially extending annular recess 516 can also reduce the amount of material used in the bottom holding component 50 and reduce the weight, as well as avoiding the problems of material contraction and lack of control over the moulded shape during moulding.

Continuing to refer to Fig. 8, in this embodiment, the support face is defined by the annular boss 511 which is continuous in the circumferential direction. However, in a more preferred embodiment, the annular boss 511 is interrupted at the position of the first radial limiting part 513. That is to say, a segment 511a of the annular boss 511 that faces the first radial limiting part 513 radially may be omitted. This can facilitate demoulding at this position during manufacture, and can also further reduce the weight of the bottom holding component 50.

In this embodiment, the height of the first radial limiting part 513 is still less than the height of the second radial limiting part 514. The height of the rigid second radial limiting part 514 is configured to be longer to ensure that the cell can still be held securely during use or in the event of an accident, so is unlikely to fail completely. Even if used for cells of the same standard size, the height of the first radial limiting part 513 in this embodiment will be greater than the height of the first radial limiting part 313 in the embodiment shown in Fig. 6. This is because, compared with the first radial limiting part 313a shown in Fig. 6, the first radial limiting part 513 in this embodiment has a thinner structure, while the holding strength at the bottom of the cell is greater; thus, the height of the first radial limiting part needs to be somewhat larger in order to fix the cell securely. Of course, preferably, the maximum height of the first radial limiting part 513 does not exceed the height of the side enclosing barrier 515. The height of the side enclosing barrier 515 may for example 4 mm (suitable for a standard cell of height 65 mm); this height will not affect cell installation or the functionality of the first radial limiting part.

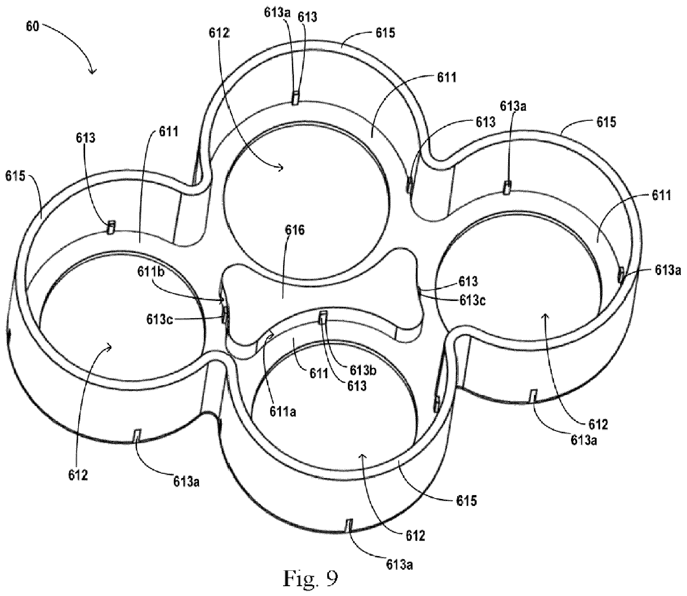

Fig. 9 shows a schematic drawing of part of the structure of a bottom holding component in another embodiment according to the present invention. The bottom holding component 60 comprises holding unit sets comprising multiple holding units; Fig. 9 may show only one of these sets. Referring to Fig. 9, each holding unit comprises a base 611 provided with a through-hole 612, and a top surface of the base 611 defines a support face. The holding unit further comprises a side enclosing barrier 615 which surrounds a cell in the circumferential direction. An inner wall of the side enclosing barrier 615 forms a second radial limiting part; and an elastic protrusion 613a, such as a rubber protrusion, forming a first radial limiting part is formed on the inner wall of the side enclosing barrier 615. The elastic protrusion 613a can elastically abut the cell radially; the inner wall of the side enclosing barrier 615 is a rigid structure and is separated from the cell by a radial gap.

In the holding unit set shown in Fig. 9, the side enclosing barrier 615 of each holding unit extends through more than 180° but less than 360° in the circumferential direction, and the side enclosing barriers 615 of the holding units are sequentially joined head-to-tail to form a continuous wall.

In this embodiment, one holding unit set comprises four holding units, and a protruding part 616 is provided at the centre of these four holding units. Each side face of the protruding part 616 is formed as an arc-shaped face that is coaxial with (taking the corresponding cell axis as an axis) and has the same radius as the side enclosing barrier 615 that faces this side wall. For example, a first side face 616a of the protruding part 616 and an inner surface of the side enclosing barrier 615 facing this side face may form side wall parts of the same virtual cylinder; and a second side face 616b of the protruding part 616 and an inner surface of the side enclosing barrier 615 facing this side face may form side wall parts of the same virtual cylinder. An elastic protrusion made of rubber for example is provided on each arc-shaped face; this includes an elastic protrusion 613b located on the first side face 611a of the protruding part 616, and an elastic protrusion 613c located on the second side face 611b of the protruding part 616. In such an embodiment, the elastic protrusion 613a located on the inner surface of the side enclosing barrier 615, the elastic protrusion 613b located on the first side face 611a of the protruding part 616, and the elastic protrusion 613c located on the second side face 611b of the protruding part 616 can all be called elastic protrusions 613 used as first radial limiting parts.

Each holding unit has four elastic protrusions 613, i.e. has four second radial limiting parts. However, in other embodiments which are not shown, one holding unit may be provided with three, five or more elastic protrusions 613, with these elastic protrusions 613 preferably being arranged uniformly around the cell axis.

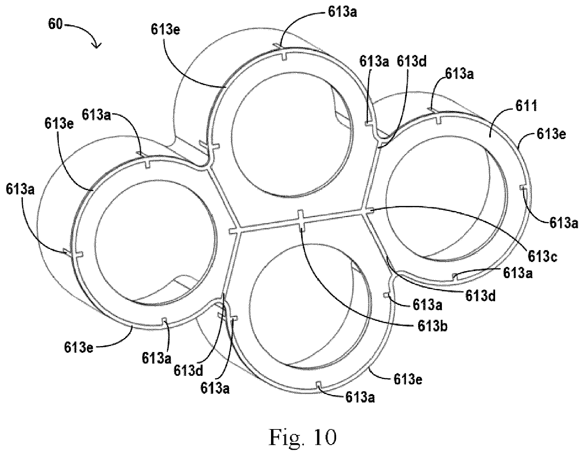

In this embodiment, the approximate structure of the bottom holding component 60 may be formed from plastic in a single injection moulding, then rubber may be added at specific positions in a second injection moulding to obtain the bottom holding component 60 with the elastic protrusions 613. An elastic component 613e (e.g. rubber) may also be formed to extend along the periphery of the bottom of the bottom holding component 60, thereby increasing the effect of shock absorption and cushioning for the bottom holding component 60, so that when the battery suffers a knock, the risk of cracking of the bottom holding component 60 can be reduced first. Preferably, the elastic protrusions 613a are integrally moulded with the peripheral elastic component 613e. More preferably, the elastic protrusions 613a, 613b, 613c and the elastic component 613e are connected as a single body, being integrated together in a plastic main body of the bottom holding component 60. For example, in some embodiments, referring to the schematic bottom view of the bottom holding component 60 shown in Fig. 10, the elastic component 613e extends all the way around the bottom of the bottom holding component 60, to link up the elastic protrusions 613a. The elastic protrusions 613b located on a pair of first side faces 611a of the protruding part 616 are a one-piece thin sheet structure penetrating the protruding part 616, and the elastic protrusions 613c located on a pair of second side faces 611b of the protruding part 616 are a one-piece thin sheet structure penetrating the protruding part 616. The elastic protrusions 613c, 613b intersect in a cross shape. The elastic component 613e is connected to the elastic protrusions 613c, 613b by elastic connecting segments 613d (made of rubber for example).

The battery holding apparatus of the invention is provided with radial limiting parts of at least two radial sizes, of which one radial limiting part is used to elastically clamp a cell of the battery radially during normal use, and another radial limiting part is used to ensure a radial holding force for the battery when the first radial limiting part fails, thus preventing battery failure. Furthermore, the battery holding apparatus of the present invention is also compatible with cells having radial size process errors; whether they are cells slightly larger than the standard size or cells slightly smaller than the standard size, the battery holding apparatus of the present invention is able to clamp them and provide an effective holding force for them.

The above description of various embodiments of the present invention are provided to a person skilled in the art for descriptive purposes. It is not intended that the present invention be exclusively or limited to a single disclosed embodiment. As above, those skilled in the field of the above teaching will understand various alternatives and variants of the present invention. Thus, although some alternative embodiments have been specifically described, those skilled in the art will understand, or develop with relative ease, other embodiments. The present invention is intended to include all alternatives, modifications and variants of the present invention described here, as well as other embodiments which fall within the spirit and scope of the present invention described above.

## Claims

1. A battery holding apparatus, for holding a battery comprising at least one cell (200), **characterized in that** the battery holding apparatus at least comprises a holding component (30) located at one end of the cell (200) in a height direction (H), the holding component comprising at least one holding unit corresponding to the at least one cell, and each holding unit comprising:
a base (311), defining a support face supporting the cell;
a first radial limiting part (313), extending from the base in the height direction of the cell and configured to be able to elastically abut the cell radially;
a second radial limiting part (314), extending from the base in the height direction of the cell and arranged rigidly, wherein a radial distance (R2) between the second radial limiting part and a cell axis (X1) of the cell is greater than a radial distance (R1) between the first radial limiting part and the cell axis.

2. The battery holding apparatus as claimed in claim 1, **characterized in that** the height of the first radial limiting part (313) is less than the height of the second radial limiting part (314).

3. The battery holding apparatus as claimed in claim 1, **characterized in that** the base has a recess (32) which is sunk relative to the support face, and part of the first radial limiting part (313) in the height direction is located in the recess (32).

4. The battery holding apparatus as claimed in any one of claims 1-3, **characterized in that** the battery holding apparatus is used to hold a cylindrical cell, and a face of the first radial limiting part (313) that faces the cell is externally tangential to a side face of the cell; and a face of the second radial limiting part (314) that faces the cell wraps around the cell.

5. The battery holding apparatus as claimed in claim 4, **characterized in that** three adjacent said holding units can share one said first radial limiting part comprising three jaws (313, 313c), each jaw respectively abutting the cell in one said holding unit.

6. The battery holding apparatus as claimed in claim 5, **characterized in that** peripheral surfaces of the three jaws of the first radial limiting part are formed as arc-shaped faces with the same axis and equal radii.

7. The battery holding apparatus as claimed in claim 5, **characterized in that** each jaw (313) comprises an arc-shaped wall segment (3111) extending in the height direction, and a top segment (3112) at the top of the arc-shaped wall segment, the top segment extending radially towards an axis (X2) of the arc-shaped wall.

8. The battery holding apparatus as claimed in claim 4, **characterized in that** three adjacent said holding units can share one said second radial limiting part, the second radial limiting part being formed as an annular structure enclosed by three arc-shaped sidewalls (314, 314c).

9. The battery holding apparatus as claimed in any one of claims 1-3, **characterized in that** the battery holding apparatus is used to hold a cylindrical cell, each holding unit comprises a side enclosing barrier (515) which surrounds the cell circumferentially, the first radial limiting part (513) is an elastic piece which is located at a radially inner side of the side enclosing barrier and spaced apart from the side enclosing barrier, and the second radial limiting part (514) is a fixed block fixed to an inner wall of the side enclosing barrier.

10. The battery holding apparatus as claimed in claim 9, **characterized in that** the base comprises a boss (511), a top surface of the boss defines the support face, the first radial limiting part (513) and the second radial limiting part (514) are located at a radially outer side of the boss, and the boss and the first radial limiting part (513) are spaced apart from each other.

11. The battery holding apparatus as claimed in any one of claims 1-2, **characterized in that** the battery holding apparatus is used to hold a cylindrical cell, the holding unit comprises a side enclosing barrier (615) which surrounds the cell circumferentially, an inner wall of the side enclosing barrier forms the second radial limiting part, and an elastic protrusion (613a) forming the first radial limiting part is formed on an inner wall of the side enclosing barrier.

12. The battery holding apparatus as claimed in claim 11, **characterized in that** the holding component comprises a holding unit set comprising multiple holding units, and in the holding unit set: the side enclosing barrier (615) of each holding unit extends through more than 180° but less than 360° in the circumferential direction, and the side enclosing barriers of the holding units are sequentially joined head-to-tail.

13. The battery holding apparatus as claimed in claim 12, **characterized in that** a protruding part (616) is provided at the centre of the holding unit set, each side face (616a, 616b) of the protruding part being formed as an arc-shaped face that is coaxial with and has the same radius as the side enclosing barrier that faces this side wall, and an elastic protrusion (613b, 613c) being provided on the arc-shaped face.

14. The battery holding apparatus as claimed in claim 11, **characterized in that** the battery holding apparatus further comprises an elastic component (613e) extending around the periphery of the main body of the battery holding apparatus, the elastic component preferably being integrally formed with the elastic protrusion.

15. A battery assembly, **characterized in that** the battery assembly (100) comprises:
at least one cell (200);
the battery holding apparatus as claimed in any one of claims 1 - 14, for accommodating the cell.
